# EUROPÄISCHE PATENTSCHRIFT

(11) **EP 2 513 015 B1**
(45) Veröffentlichungstag und Bekanntmachung des Hinweises auf die Patenterteilung: **13.03.2019**
(21) Anmeldenummer: 10793250.1
(22) Anmeldetag: 16.12.2010
(51) Int. Cl.: C04B 103/54

(54) **VERFAHREN ZUR QUALITATIVEN UND QUANTITATIVEN IDENTIFIZIERUNG VON MASSENGÜTERN**
METHOD FOR QUALITATIVELY AND QUANTITATIVELY IDENTIFYING BULK GOODS
PROCÉDÉ D'IDENTIFICATION QUALITATIVE ET QUANTITATIVE DE MARCHANDISES PONDÉREUSES

(30) Priorität: 18.12.2009 EP 09179832
(43) Veröffentlichungstag der Anmeldung: 24.10.2012
(73) Patentinhaber: Construction Research & Technology GmbH, 83308 Trostberg (DE)
(72) Erfinder: FREUND, Torsten, 67117 Limburgerhof (DE); NORD, Simon, 76189 Karlsruhe (DE); JUNG, Marc, Rudolf, 67551 Worms (DE); KAUB, Hans-Peter, 67122 Altrip (DE); SCHRÖDER-GRIMONPONT, Tina, 76764 Rheinzabern (DE); SCHMITT, Dirk, 69181 Leimen (DE)
(74) Vertreter: BASF IP Association
(86) Internationale Anmeldenummer: PCT/EP2010/069983
(87) Internationale Veröffentlichungsnummer: WO 2011/073354

(56) Entgegenhaltungen:
- EP-A1- 0 198 426
- EP-A1- 0 669 392
- EP-A2- 0 896 221
- WO-A1-99/52708
- WO-A1-2005/113468
- WO-A1-2006/119561
- WO-A2-99/40123
- DE-A1-102005 062 027
- DE-C1- 3 301 357
- US-A- 5 324 356

## Beschreibung

Die vorliegende Erfindung betrifft ein Verfahren zur Identifizierung und Quantifizierung von Massengütern in Artikeln, die fluoreszenzmarkierte Polymerdispersionen enthalten, wobei die Massengüter Baustoffe umfassen.

### Hintergrund der Erfindung

Massengüter sind Waren oder Güter, die hinlänglich bekannt sind und die in großer Menge produziert oder befördert werden. Sie können auch als Gebrauchsgüter bezeichnet werden und sind dadurch gekennzeichnet, dass sie in großen Mengen geliefert werden und bestimmte Grundspezifikationen erfüllen müssen. Hierzu gehören die losen Schütt- und Flüssiggüter, die eine Mengenangabe in Stück nicht möglich machen.

Die Klassifizierung der Massengüter erfolgt nach ihrem Stoffzustand in trockene und nasse Massengüter und gasförmige Massengüter. Diese Klassifizierungen geben direkte Hinweise auf die für die Transport-, Umschlag- und Lageraktivitäten notwendigen Produktionsfaktoren. Sie sind daher von hoher praktischer Relevanz für die Akteure in den Transformationsprozessen der internationalen Logistik. Nasse Massengüter (z.B. Rohöl, Mineralölprodukte) werden mit Tankschiffen auf See- und Binnenschiffen mit Güterwagen und Lastkraftwagen bewegt, zuweilen auch Saugwerken, umgeschlagen und meist in Silos und manchmal auf Freiland gelagert. Gasförmige Massengüter werden ähnlich der nassen Massengüter - mit im Detail jedoch unterschiedlichen Technologien - logistisch transformiert. Der logistische Fluss von Massengütern wird meist in Gewichten oder Volumina gemessen. Massengüter werden nicht verpackt, sie können jedoch durch die Einbringung in Packmittel (z.B. Säcke, Tonnen, Kartons oder Flaschen) alle mittels Ladungsträgern (z.B. Container) in Stückgut umgewandelt werden. Stückgüter sind Halb- und oder Fertigfabrikate, zuweilen auch verpackte Massengüter. Historisch werden sie meist durch Packmittel wie Säcke oder Tonnen zusammengefasst und geschützt - unmittelbar auf die Verkehrsträger verladen.

Gebrauchsgüter oder Verbrauchsgüter werden einheitlich von einem großen Verbraucherkreis (Konsumenten oder Weiterverarbeiter) nachgefragt und in der Regel über einen längeren Zeitraum produziert. Hierbei kann es sich um Produktions- (z.B. Erze, Holz, Stahl, Blech, Röhren) und Konsumgüter (z.B. Haushaltswaren, Textilien) handeln.

Sie umfassen flüssige Massengutladung wie Erdöl, Flüssiggas, Flüssigerdgas und flüssige Erdölerzeugnisse. Die feste Massengutladung wird unterteilt in granulöser Form (Schüttgut) wie Erz, Kohle, Bauxit, Phosphat, Zement, Getreide oder in festes Massengut in stückiger Form (Stückgut), wie Baumstämme, Papier, Automobile oder Stahl.

Die im Handel genannten Waren wie Produkte und die in der Landwirtschaft und Gartenbau genannten Erzeugnisse werden im Handel zu Artikeln.

Handelsware ist eine Sammelbezeichnung für die von Gewerbetreibenden umgesetzten materiellen Wirtschaftsgüter. Im weitesten Sinn kommen als Umsatzobjekte Wirtschaftsgüter aller Art in Betracht, Rohstoffe, landschaftliche Erzeugnisse, Investitionsgüter, Konsumgüter, Devisen und Wertpapiere. Erzeugnisse sind in sich geschlossene, aus einer Anzahl von Gruppen und/oder Teilen bestehende funktionsfähige Gegenstände (z.B. Maschinen, Geräte) als Fertigungs-Endergebnisse.

Insbesondere unterliegt der Einsatz von Baustoffen einerseits Normen, anderseits kommt es häufig zu Fehlern in Folge der Verwendung eines für eine normgemäße und bestimmte Anwendung ungeeigneten Baustoffs und eine ungeeignete Dosierung von Mehrkomponentensystemen. Schadhafte Bauteile sind die Folge, wobei der Schaden oftmals erst Jahre nach Abschluss eines Bauprojektes offenkundig wird.

Der vorliegenden Erfindung lag somit die Aufgabe zugrunde quantitativ und qualitativ die Art und Herkunft der verwendeten Materialien zu erfassen und dadurch eine Qualitätssicherung des Baustoffs unmittelbar während und nach seiner Anwendung durchzuführen. Dabei sollte der Nachweis an einem fertig gestellten Bauwerk möglich sein.

Das Verfahren wurde für Baustoffe entwickelt und istauf solche beschränkt.

Gelöst wurde diese Aufgabe durch die Bereitstellung eines Verfahrens zur Identifizierung von Massengütern in Artikeln, wobei den Massengütern eine fluoreszenzmarkierte Polymerdispersion zugesetzt wurde, worin Partikel durch eine Mischung von Farbstoffen kodiert sind und die Polymerdispersionspartikel quantitativ bestimmt werden, wobei die Massengüter Baustoffe umfassen. Die Kodierung erfolgt, indem bevorzugt eine Polymerdispersion hergestellt wird, in der jedes einzelne Dispersionspartikel ein für die jeweilige Dispersion unverwechselbares einheitliches Muster von Farbstoffen enthält. Das Muster ist bestimmt durch die Anzahl der insgesamt verfügbaren Farbstoffe sowie ihre relative Konzentration im Polymerpartikel. Das Muster lässt sich durch spektroskopische und/oder mikroskopische Methoden nachweisen.

Es hat sich nun überraschenderweise herausgestellt, dass durch Markierung von Massengütern in Artikeln eine quantitative und qualitative Art der Herkunft der verwendeten Materialien erfasst werden kann. Hierbei konnten die Marker kostengünstig hergestellt werden, die mit einer quantitativ hoch verbundenen Markierung für Massengüter verbunden sind. Die erfindungsgemäße Markierung von Massengütern kann durch Dosierung des Markers an unterschiedlichen Punkten während ihres Herstellungsprozesses erfolgen.

### Ausführliche Beschreibung der Erfindung

Artikel werden häufig unter Verwendung von Massengütern hergestellt. Hinsichtlich der Verarbeitung ist es oftmals schwierig, wenn nicht gar unmöglich, die Art, Herkunft und die verwendete Menge des im Artikel eingesetzten Massengutes mit befriedigender Sicherheit nachzuweisen.

In einer bevorzugten Ausführungsform der Erfindung werden für die Identifizierung und Quantifizierung von Massengütern flüssige und feste Massengüter verwendet. Hierbei kann das Massengut in zwei Kategorien eingeteilt werden, in flüssiges Massengut, wie Erdöl, Flüssiggas, Flüssigerdgas und flüssige Erdölerzeugnisse, und festes Massengut. Dabei wird die feste Massengutladung, in granulöser Form (Stückgut), wie Erz, Kohle, Bauxit, Phosphat, Zement, Getreide, oder festes Massengut in stückiger Form (Stückgut), wie Baumstämme, Papier, Automobile oder Stahl, eingeteilt.

Aus der WO-A-99/52708 ist ein Verfahren zum Markieren von gasförmigen, flüssigen oder festen Materialien bekannt, wobei man zu einem gasförmigen, flüssigen oder festen Material, das später identifiziert werden soll, eine ausreichende Menge an gefärbten Mikropartikeln und/oder Nanopartikeln zusetzt, die an Carrier-Mikropartikeln gebunden sind. Die verwendeten Teilchen bestehen beispielsweise aus vernetztem Polystyrol und haben einen Durchmesser von etwa 5,5 µm. Die Teilchen werden z.B. mit drei verschiedenen Fluoreszenzfarbstoffen in acht verschiedenen Konzentrationen der Farbstoffe angefärbt bzw. kodiert, so dass man 512 verschiedene Gruppen von kodierten Teilchen erhält. Die einzelnen Gruppen können beispielsweise mit Hilfe eines Cytometers identifiziert werden. Die kodierten Teilchen werden zum Markieren von Substanzen, z.B. Kochsalzkristallen, verwendet, um so beispielsweise den Hersteller, die Produktionscharge und das Herstelldatum zu verifizieren.

Insbesondere kann es sich bei den flüssigen Massengütern um Betonzusatzmittel und Zementadditive handeln.

Betonzusatzmittel sind in Wasser gelöste oder aufgeschlämmte Stoffe, die dem Beton beigemischt werden, um durch physikalische und/oder chemische Wirkungen die Eigenschaften des Frisch- oder Festbeton, wie z. B. Verarbeitbarkeit, Abbindeverhalten, Erhärten oder Dauerhaftigkeit, zu verändern. Die Zugabe der Stoffe erfolgt entweder direkt bei der Herstellung im Betonwerk oder nach der Zulieferung auf der Baustelle. Betonzusatzmittel werden in der Regel flüssig und in geringen Mengen zugegeben. Die Zugabe, bezogen auf das Zementgewicht, liegt im allgemeinen Bereich von 0,2-2%. Betonverflüssiger und Fließmittel, oft auch Plastifikatoren, Superplastifikatoren oder Superverflüssiger genannt, sind die am häufigsten gebrauchten Zusatzmittel. Fließmittel dienen auch zur Herstellung von Beton mit fließfähiger Konsistenz. Betonverflüssiger und Fließmittel verbessern die Verarbeitbarkeit des Betons oder vermindern bei gleicher Verarbeitbarkeit den Wasseranspruch, was zu einer Erhöhung der Druckfestigkeit und der Dichtigkeit führt. Durch Zugabe von Betonverflüssiger wird der Frischbeton flüssiger und damit leichter verarbeitbar. Für eine bestimmte Verarbeitbarkeit kann dadurch die erforderliche Wassermenge reduziert werden.

Unter Mahlhilfsmittel versteht man die Mahlkörper sowie andere Additive, wie z. B. Flüssigkeiten beim Nassmahlen. Als Mahlkörper werden meistens Kugeln verwendet, da diese die kinetisch und abrasiv widerstandsfähigste Geometrie und ein günstiges Volumen- : Oberfläche Verhältnis aufweisen. Mit Mahlhilfsmitteln kann Zement, Portlandzement, Berylliumoxid, Kalkstein, Gips, Ton und Bauxit behandelt werden.

Bei der Aufbereitung von vorbehandelten oder unbehandelten Mineralien werden diese gewöhnlich zu verhältnismäßig kleinen Teilchen vermahlen. Hierbei werden oft Mahlhilfsmittel verwendet, um die Mahlgeschwindigkeiten oder die Feinheit der Teilchen bei gegebener Arbeitsgeschwindigkeit zu erhöhen. Als Mineralien werden natürlich vorkommende anorganische Mineralien, wie Phosphatgestein, teilweise bearbeitete Mineralien wie konzentriertes Eisenerz und Mischungen von Mineralien wie Zement, Klinker oder keramische Stoffe zusammen mit den Mahlhilfsmitteln vermahlen.

Bevorzugt handelt es sich bei den festen Massengütern um Beton, Zement und Klinker.

Beton ist ein Gemisch aus Zement, Gesteinskörnung bzw. Betonzuschlag (Sand und Kies oder Splitt) und Anmachwasser. Er kann außerdem Betonzusatzstoffe und Betonzusatzmittel enthalten. Zusammen mit Baustahl oder Spannstahl kann Stahlbeton bzw. Spannbeton hergestellt werden. Der Zement dient als Bindemittel, um die anderen Bestandteile zusammenzuhalten. Die Festigkeit des Betons entsteht durch Auskristallisierung der Klinkerbestandteile des Zements, wodurch sich kleinste Kristallnadeln bilden, die sich fest ineinander verzahnen. Die Betoneigenschaften sind abhängig von der Zusammensetzung (Zementsorte, Zementgehalt, Menge des Anmachwassers (Wasserzementwert), Kornabstufung, Qualität der Zuschläge, Zusatzstoffe und -mittel, Mehlkorngehalt), Verarbeitung (Verdichtung, Nachbehandlung).

Der bevorzugte Zement ist ein anorganisches, fein gemahlenes, hydraulisch wirkendes Bindemittel für Mörtel und Beton. Bei Zugabe von Wasser erhärtet der sich bildende Zementleim durch Hydratation zu wasser- und raumbeständigem Zementstein. Zement besteht im Wesentlichen aus Verbindungen von Calciumoxid (CaO, Kalk) mit Silicumdioxid (SiO₂, Kieselsäure), Aluminiumoxid (Al₂O₃, Tonerde) und Eisenoxid (Fe₂O₃). Zement wird zur Herstellung von Beton, Mörtel, Betonsteinen und Fertigteilen verwendet. Die Hauptzementarten umfassen Portlandzement, Portlandkompositzemente, Hochofenzemente, Puzzolanzement und Kompositzement.

Die Rohstoffe (in der Regel Kalkstein, Ton, Sand und Eisenerz) werden in Steinbrüchen abgebaut, in Brechern vorzerkleinert und in das Zementwerk befördert. In einer Rohmühle werden alle Rohmaterialien zusammen vermahlen und gleichzeitig getrocknet. Das dabei entstehende Rohmehl wird dann in einem Drehrohrofen bei Temperaturen von ca. 1.450 °C zu sogenanntem Klinker gebrannt, welcher dann in einem Kühler auf eine Temperatur von unter 200 °C heruntergekühlt wird. Der Klinker wird vorwiegend in Silos oder in Hallen gelagert und noch einmal homogenisiert. Beim Brennen des Rohmehls zu Klinker entstehen neue chemische Verbindungen, die die hydraulische Erhärtung des Zements ermöglichen.

In einer bevorzugten Ausführungsform können die erfindungsgemäßen Polymerdispersionen in eine Partikelgrößenverteilung mit einem mittleren Durchmesser von 50 nm bis 500 µm eingesetzt werden.

Als Polymerdispersionen oder auch Polymerlatex bezeichnet man eine kolloidal stabile Dispersion von Polymerpartikeln in einer wässrigen Phase. Der Durchmesser der Polymerpartikel kann zwischen einigen 10 Nanometern und wenigen Mikrometern liegen. Je nach Teilchendurchmesser und Polymergehalt erscheinen Polymerdispersionen als mehr oder weniger trübe bis weiße Flüssigkeiten. Die kolloidale Stabilität der Dispersion wird meistens durch grenzflächenaktive Stoffe, wie Tenside oder Schutzkolloide erzielt. Polymerdispersionen können durch verschiedene Polymerisationsverfahren (z.B. Emulsionspolymerisation, Suspensionspolymerisation) direkt aus den Monomeren oder auch durch Dispergieren eines Polymeren hergestellt werden.

Aus der WO-A-99/40123 ist ein Verfahren zur Herstellung von wässrigen Polymerdispersionen bekannt, deren dispergierte Polymerteilchen einen organischen Farbstoff homogen, d.h. molekulardispers verteilt enthalten. Solche wässrigen Dispersionen werden durch Miniemulsionspolymerisation hergestellt, indem man ethylenisch ungesättigte Monomere, die einen organischen Farbstoff gelöst enthalten, in Form einer Öl-in-Wasser-Emulsion in Gegenwart von Radikale bildenden Polymerisationsinitiatoren polymerisiert, wobei die disperse Phase der Emulsion im Wesentlichen von farbstoffhaltigen Monomertröpfchen mit einem Durchmesser < 500 nm gebildet wird. In einer vorteilhaften Ausführungsform der Erfindung setzt man bei der Polymerisation Monomermischungen ein, die vernetzend wirkende Monomere enthalten. Die Polymerdispersionen sind sedimentationsstabil. Die dispergierten Teilchen haben einen mittleren Teilchendurchmesser von 100 bis 400 nm. Sie können mit Hilfe konventioneller Trocknungsmethoden aus den wässrigen Dispersionen gewonnen werden. Die farbstoffhaltigen Polymerdispersionen werden beispielsweise zur Pigmentierung von hochmolekularen organischen und anorganischen Materialien, zur Pigmentierung von Druckfarben und von Tinten für den Ink-Jet-Druck verwendet.

Aus der WO-A-2004/037867 sind Alkyldiketene enthaltende wässrige Polymerdispersionen bekannt, die durch Miniemulsionspolymerisation von hydrophoben monoethylenisch ungesättigten Monomeren in Gegenwart von Alkyldiketenen erhältlich sind. Diese Dispersionen werden als Leimungsmittel für Papier, als Hydrophobierungsmittel für Leder, natürliche und/oder synthetische Fasern und Textilien verwendet.

Baran berichtet in WO 2007/130190 über eine Dispersionszusammensetzung und - Verfahren, welche eine Lösung und oberflächenmodifizierte, fluoreszierende, anorganische Nanopartikel in der Lösung enthält. Die Zusammensetzungen und Beschichtungen können zur Markierung von Oberflächen verwendet werden.

Aus der WO 03/046065 sind Polymerdispersionen bekannt, die Wasser enthalten, mindestens ein durch Emulsionspolymerisation herstellbares Polymeres und mindestens ein Element ausgewählt aus der Gruppe bestehend aus Li, B, Co, Cu, Mo, Ni, Pb und Sn oder ein Salz eines solchen Elements oder ein Gemisch aus zwei oder mehr davon.

Weitere farbmittelhaltige Polymerdispersionen, deren farbmittelhaltige Polymerisatteilchen einen mittleren Teilchendurchmesser unterhalb von 1.000 nm haben, sind aus der EP-A-1 191 041 bekannt. Als Farbmittel kommen neben organischen Farbstoffen auch UV-Absorber und optische Aufheller in Betracht. Sie werden durch Lösen eines Farbmittels in mindestens einem ethylenisch ungesättigten Monomer, Emulgieren dieser Lösung in Wasser unter Bildung einer konventionellen Makroemulsion, Homogenisieren der Makroemulsion unter Bildung einer Miniemulsion mit einer mittleren Tröpfchengröße von unterhalb 1000 nm und Polymerisieren der Miniemulsion in Gegenwart eines Radikale bildenden Polymerisationsinitiators, 0,1 bis 20 Gew.-% wenigstens einer nichtionischen oberflächenaktiven Verbindung und 1 bis 50 Gew.-%, jeweils bezogen auf die eingesetzten Monomeren, wenigstens eines amphiphilen Polymerisats hergestellt. Die Polymerteilchen enthalten 0,5 bis 50 Gew.-%, mindestens eines organischen Farbstoffs, optischen Aufhellers oder UV-Absorbers homogen verteilt, worunter verstanden werden soll, dass die organischen Farbmittel in der Polymermatrix monomolekular gelöst sind oder in Form von bi- oder höhermolekularen Aggregaten vorliegen.

In einer weiteren bevorzugten Ausführungsform der Erfindung umfassen die Polymerdispersionen hydrophobe Monomere aus der Gruppe C₁-bis C₁₈-Alkylester der Acrylsäure, C₁- bis C₁₈-Alkylester der Methacrylsäure, Vinylacetat, Vinylpropionat, Vinylbutyrat, Styrol, Chlorstyrol und/oder α-Methylstyrol, Methylacrylsäureester, Maleinsäure sowie einer Kombination dieser Monomere.

### Als ethylenisch ungesättigte Monomere kommen beispielsweise

(a) hydrophobe Monomere aus der Gruppe C₁-bis C₁₈-Alkylester der Acrylsäure, C₁-bis C₁₈-Alkylester der Methacrylsäure, Vinylacetat, Vinylpropionat, Vinylbutyrat, Styrol, Chlorstyrol und/oder α-Methylstyrol,
(b) gegebenenfalls hydrophile Monomere aus der Gruppe ethylenisch ungesättigter C₃- bis C₆-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, C₁- bis C₈-Hydroxyalkylester von C₁- bis C₆-Carbonsäuren, Di-C₁- bis C₃-alkylamino-C₂-bis C₄-alkylacrylate, Di-C₁- bis C₃-alkylamino-C₂- bis C₄-alkylmethacrylate, Acrylamid, Methacrylamid, N-Vinylformamid und/oder N-Vinylpyrrolidon und
(c) gegebenenfalls mindestens ein vernetzend wirkendes Monomer mit mindestens zwei Doppelbindungen im Molekül in Betracht.

Die Monomeren der Gruppe (a) können allein, in Mischung untereinander sowie in Kombination mit den Monomeren (b) und/oder (c) bei der Suspensionspolymerisation eingesetzt werden. Beispiele für Monomere der Gruppe (a) sind Methylacrylat, Ethylacrylat, Isopropylacrylat, n-Propylacrylat, n-Butylacrylat, Isobutylacrylat, tert.-Butylacrylat, sek.-Butylacrylat, Pentylacrylat, n-Hexylacrylat, Octylacrylat, 2-Ethylhexylacrylat, Decylacrylat, Dodecylacrylat, Palmitylacrylat, Stearylacrylat, Methylmethacrylat, Ethylmethacrylat, Isopropylmethacrylat, n-Propylmethacrylat, n-Butylmethacrylat, Isobutylmethacrylat, sek.-Butylmethacrylat, tert.-Butylmethacrylat, Pentylmethacrylat, n-Hexylmethacrylat, Cyclohexylmethacrylat, Heptylmethacrylat, 2-Ethylhexylmethacrylat, Octylmethacrylat, Decylmethacrylat, Dodecylmethacrylat, Palmitylmethacrylat und Stearylmethacrylat sowie Vinylacetat, Vinylpropionat, Vinylbutyrat, Styrol, Chlorstyrol und/oder α-Methylstyrol. Bevorzugt eingesetzte Monomere dieser Gruppe sind Methylmethacrylat und Styrol.

Monomere der Gruppe (b), die gegebenenfalls zur hydrophilen Modifizierung der Polymeren eingesetzt werden, sind beispielsweise ausgewählt aus der Gruppe der ethylenisch ungesättigten C₃- bis C₆-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, C₁- bis C₈-Hydroxyalkylester von C₁- bis C₆-Carbonsäuren, Di-C₁- bis C₃-alkylamino-C₂- bis C₄-alkylacrylate, Di-C₁- bis C₃-alkylamino-C₂- bis C₄-alkylmethacrylate, Acrylamid, Methacrylamid, N-Vinylformamid und/oder N-Vinylpyrrolidon.

Beispiele für ethylenisch ungesättigte Carbonsäuren sind Acrylsäure, Methacrylsäure, Crotonsäure, Maleinsäure, Fumarsäure, Itaconsäure und Vinylessigsäure. Die ethylenisch ungesättigten Carbonsäuren sowie die Sulfogruppen enthaltenden Monomeren können in Form der freien Säuren sowie in partiell oder vollständig mit Alkalimetall-, Erdalkalimetallbasen, Ammoniak oder Aminen neutralisierter Form bei der Polymerisation eingesetzt werden. Meistens setzt man die Natrium-, Kalium- oder Ammoniumsalze der sauren Monomeren ein. Die sauren Monomeren können jedoch auch mit Aminen wie Butylamin, Morpholin, Ethanolamin, Diethanolamin oder Triethanolamin neutralisiert und in partiell oder vollständig neutralisierter Form bei der Polymerisation eingesetzt werden. Von den Hydroxyalkylestern kommen insbesondere 2-Hydroxyethylacrylat, 2-Hydroxyethylmethacrylat, Hydroxypropylacrylat, Hydroxybutylacrylat und 2-Hydroxypropylmethacrylat in Betracht.

Beispiele für basische Monomere sind Dimethylaminoethylacrylat, Dimethylaminoethylmethacrylat, Dimethylaminopropylacrylat, Dimethylaminopropylmethacrylat, Diethylaminoethylacrylat, Diethylaminoethylmethacrylat, Di-n-Propylaminoethylacrylat und Din-Propylaminoethylmethacrylat. Die basischen Monomeren können als freie Base, als Salz mit Mineralsäuren, gesättigten Carbonsäuren oder Sulfonsäuren wie p-Toluolsulfonsäure oder Benzolsulfonsäure sowie in quaternierter Form (z.B. quaterniert mit Methylchlorid, Ethylchlorid, n-Propylchlorid, Dimethylsulfat, n-Hexylchlorid, Cyclohexylchlorid oder Benzylchlorid) bei der Polymerisation verwendet werden.

Die Monomeren der Gruppe (b) können einzeln oder in Kombination bei der Polymerisation eingesetzt werden. Vorzugsweise verwendet man aus dieser Gruppe Acrylsäure, Methacrylsäure, Acrylamid, Methacrylamid, Vinylformamid und N-Vinylpyrrolidon.

Als Monomere der Gruppe (c) setzt man vernetzend wirkende Monomere mit mindestens zwei Doppelbindungen im Molekül ein. Beispiele für solche Monomere sind Ester aus mehrwertigen Alkoholen und ethylenisch ungesättigten Carbonsäuren wie Acrylsäure oder Methacrylsäure z.B. Ethylenglykoldiacrylat, Ethylenglykoldimethacrylat, Butandioldiacrylat, Butandioldimethacrylat, Hexandioldiacrylat, Hexandioldimethacrylat, Acrylate und Methacrylate von Polyalkylenglykolen wie Polyethylenglykolen, Polypropylenglykolen oder Blockcopolymeren aus Ethylenoxid und Propylenoxid mit Molmassen von beispielsweise 100 bis 5.000, Allylacrylat, Allylmethacrylat, Trimethylolpropantriacrylat, Trimethylolpropantrimethacrylat, Pentaerythrittriacrylat, Pentaerythrittrimethacrylat, Pentaerythrittetraacrylat, Pentaerythrittetramethacrylat, Divinylbenzol, Divinylharnstoff und Methylenbisacrylamid. Bevorzugt kommen Allylmethacrylat, Butandiol-1,4-diacrylat und Trimethylolpropantriacrylat als Vernetzer in Betracht.

Gegenstand der vorliegenden Erfindung ist daher auch ein Verfahren, in dem die Polymerdispersionen Fluoreszenzfarbstoffe enthalten, die im Wellenlängenbereich von 200 nm bis 1400 nm absorbieren und emittieren.

Fluoreszenzfarbstoffe sind dem Fachmann bekannt. Sie werden beispielsweise in der zum Stand der Technik genannten WO-A-99/40123, Seite 10, Zeile 14 bis Seite 25, Zeile 25 und in der EP-B-0 692 517, Seite 3, Zeile 7 bis Seite 6, Zeile 1, beschrieben. Bevorzugt geeignete Fluoreszenzfarbstoffe gehören beispielsweise zu der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe. Vorzugsweise werden solche Fluoreszenzfarbstoffe verwendet, die eine höhere Löslichkeit in der Ölphase als in der wässrigen Phase der Öl-in-Wasser-Emulsion haben. Beispielsweise sollten die Farbstoffe eine Löslichkeit von wenigstens 0,001 Gew.-%, vorzugsweise von wenigstens 0,01 Gew.-% in der Ölphase haben.

B.J. Battersby, G.A. Lawrie, A.P.R. Johnston und M. Trau berichten in Chem. Commun., 2002, 1435 - 1441 über optische Kodierung von kolloidalen Suspensionen mit Fluoreszenzfarbstoffen, Nanokristallen und Metallen. So wurden beispielsweise Kolloide mit einem Durchmesser von 3 bis 6 µm durch Einlagerung von Fluoreszenzfarbstoffen oder von komplex gebundenen Lanthaniden optisch markiert. Eine andere Art der Markierung von Kolloiden besteht in der Einlagerung von Zinksulfid, das mit Cadmium-Selenid-Nanokristallen versehen ist oder in der elektrochemischen Ablagerung von Metallionen in Hohlräumen von Kolloiden. Die Kolloide können beispielsweise mit Hilfe eines Fluoreszenzmikroskops oder eines Cytometers voneinander unterschieden werden.

Aus der US-A-3,772,099 ist die Kodierung von Explosivstoffen mit Hilfe eines anorganischen Leuchtstoffes bekannt, wobei man beispielsweise einen feinteiligen, kommerziellen Leuchtstoff und einen feinteiligen, mit mindestens einem Element der Lanthanidengruppe des Periodischen Systems dotierten Leuchtstoff mit einer wässrigen Kaliumsilikatlösung mischt, die Mischung trocknet, mahlt und siebt. Die Teilchengröße des so gebildeten Konglomerats beträgt 0,5 bis 0,7 mm, während die Teilchengröße der Leuchtstoffe in dem Bereich von 6 bis 8 µm liegt. Ein solches Konglomerat kann beispielsweise während der Herstellung von Dynamit vorsichtig mit dem Sprengstoff gemischt werden. Bereits Mengen von 0,01 Gew.-% reichen für eine Markierung eines Explosivstoffs. Die so markierten Explosivstoffe können - auch nach einer Detonation an Hand von eingesammelten Proben - mit Hilfe der Emissionslinien identifiziert werden, die die kodierten Leuchtstoffe beispielsweise beim Bestrahlen mit ultraviolettem Licht aussenden. Aufgrund unterschiedlicher Dotierung von Leuchtstoffen gibt es eine große Anzahl von Kombinationsmöglichkeiten, so dass man den Hersteller, das Jahr, den Monat und die Woche der Herstellung eines in geeigneter Weise mit mehreren dotierten Leuchtstoffen markierten Sprengstoffs ermitteln kann.

Aus der US-A-4,390,452 sind kodierte Mikropartikel für die retrospektive Identifizierung von Substanzen bekannt, die solche Mikropartikel enthalten. Die kodierten Mikropartikel werden erhalten, indem man nacheinander gemäß der Lehre der DE-A-26 51 528 auf einer Trägerfolie visuell unterscheidbare Farbschichten aufbringt, dann auf der Oberfläche des Verbundes mit Hilfe eines Diazotierungsprozesses eine sehr dünne Schicht herstellt, in der durch Bestrahlen mit UV-Licht, das durch ein Mikrodaten enthaltendes Positiv auf diese Schicht trifft, nach Entwicklung Zahlen und Symbole enthalten sind, die mikroskopisch ausgewertet werden können. Aus der Beschichtung werden Mikropartikel hergestellt, die nicht größer als 1000 µm sind und die zwei flache, parallel verlaufende Flächen haben, die die aufgebrachten Zahlen und Symbole enthalten. Die Mikropartikel werden zum Markieren von Substanzen z.B. Sprengstoffen, verwendet, um retrospektiv am Produkt die Herkunft und Produktionsdaten zu erkennen.

Die WO-A-03/044276 betrifft ein Sicherheitspapier und Sicherheitsartikel mit mindestens einem Sicherungselement auf Basis mindestens eines photolumineszierenden Segments, das zumindest teilweise in einem Papierprodukt eingelagert ist, das zu 30 bis 99 Gew.-% aus trockenen Fasern und zu 70 bis 1 Gew.-% aus Füllstoff besteht. Das Sicherungselement kann beispielsweise durch Färben eines Trägers aus Cellulosefasern mit einem Photolumineszenzfarbstoff hergestellt werden. Die Photolumineszenz wird sichtbar, wenn man das Sicherungselement mit Licht einer Wellenlänge von 200 bis 500 nm bestrahlt.

Aus der WO-A-02/46528 ist bekannt, eine der Sicherheit dienende Markierung auf einem Substrat wie Papier, Keramik oder Polymer, als Beschichtung aufzubringen, wobei der Binder des Beschichtungsmittels fluoreszierende Mikropartikel eines Durchmessers von 0,2 bis 2 µm und davon optisch unterscheidbare diskrete Teilchen eines Durchmessers von 10 bis 20 µm enthält. Die Beschichtung erscheint bei Betrachtung mit dem bloßen Auge farblich einheitlich, jedoch sind bei starker Vergrößerung die diskreten Teilchen von den Teilchen mit einem Durchmesser von 0,2 bis 2 µm farblich zu unterscheiden.

Aus der US-B-6,455,157 ist bekannt, mindestens zwei verschiedene Gruppen von Mikropartikeln zum Markieren von Produkten zu verwenden, wobei jedes Mikroteilchen einer Gruppe mehrere Farbschichten enthält, die einen Code bilden. Mit Hilfe dieser Mikroteilchen ist eine hierarchische Codierung von Produkten möglich, so dass man beispielsweise an den markierten Produkten den Hersteller und die Produktnummer erkennen kann.

Farbstoffhaltige Polymerisatdispersionen sind grundsätzlich bekannt. So beschreiben die EP-A 691 390 und die DE-A 44 36 892 farbstoffenthaltende, wässrige Polymerisatdispersionen auf der Basis ethylenisch ungesättigter Monomere, die dadurch erhältlich sind, dass man in einem ersten Schritt eine polymere Verbindung in einem organischen Lösungsmittel herstellt, wobei man dem organischen Lösungsmittel vor, während oder nach der Polymerisation einen oder mehrere lösliche Farbstoffe zusetzt, und in einem zweiten Schritt die auf diese Weise erhaltenen farbstoffhaltigen Polymerlösungen in wässrige Polymerisatdispersionen überführt. Derartige farbstoffhaltige Polymerisatdispersionen sind jedoch hinsichtlich der Migrationsstabilität der Farbstoffe noch nicht zufriedenstellend.

Die EP-A 566 448 beschreibt farbstoffenthaltende, wässrige Polymerisatdispersionen auf der Basis ethylenisch ungesättigter Monomere, die dadurch erhältlich sind, dass man in einem ersten Schritt eine radikalische, wässrige Emulsionspolymerisation ethylenisch ungesättigter Monomere durchführt und die so erhaltenen Polymerisatdispersionen mit einer Lösung von Farbstoffen in organischen Lösungsmitteln imprägniert. Die so erhältlichen Polymerisatdispersionen weisen jedoch ebenfalls keine zufriedenstellende Migrationsstabilität der Farbstoffe auf. In dieser Schrift wird ebenfalls darauf hingewiesen, dass man hinreichend wasserverträgliche Farbstoffe auch während der Polymerisation zusetzen kann. Konkrete Hinweise auf diese Ausführungsform lassen sich der genannten Schrift jedoch nicht entnehmen. Nachteilig ist der bei dieser Vorgehensweise erforderliche Einsatz größerer Mengen an organischen Lösungsmitteln.

Die US 4,680,332 empfiehlt zur Herstellung farbstoffhaltiger Polymerisatdispersionen ebenfalls die Imprägnierung wässriger Polymerdispersionen mit Lösungen von organischen Farbstoffen in Lösungsmitteln wie Toluol oder Chlorbenzol sowie die Imprägnierung mit Öl-in-Wasser-Emulsionen derartiger Farbstofflösungen. Auch diese Vorgehensweise führt nicht zu zufriedenstellenden Produkten.

In einer bevorzugten Ausführungsform der Erfindung werden die Fluoreszenzfarbstoffe aus der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe ausgewählt.

Besonders bevorzugt sind die Fluoreszenzfarbstoffe Rylenderivate.
Als Rylen-Farbstoffe bezeichnet man die homologe Reihe von in *alpha*-Position kondensierten Naphthalin-Molekülen. Darüberhinaus ergeben zwei kondensierte Naphthaline Perylen, drei Terrylen, vier Quaterrylen. Wegen ihrer hohen Photostabilität und der hohen Fluoreszenzquantenausbeute sind diese Farbstoffe besonders interessant für einzelmolekülspektroskopische Untersuchungen. Neben mit Terrylen dotiertem *p*-Terphenyl werden hierbei besonders mit Monoimid- und Diimid-Derivaten der Rylenfarbstoffe dotierte Polymerfilme verwendet.

Dementsprechend betrifft die Erfindung in einer bevorzugten Ausführungsform ein Verfahren, wobei die Identifizierung der Massengüter in Artikeln durch einen Nachweis der Polymerdispersionen mit der Fluoreszenzmikroskopie durchgeführt wird.

Mit der Fluoreszenzmikroskopie können bestimmte Fluoreszenzfarbstoffe spezifisch angefärbt werden. Im zu untersuchenden Präparat befinden sich fluoreszierende Stoffe (Fluorochrome), die mit Licht einer bestimmten Wellenlänge zum Leuchten angeregt werden. Die angeregten Fluorochrome emittieren Licht, welches durch die Stokesverschiebung in der Regel langwelliger als das anregende Licht ist. Anregungs- und Emissionslicht können im selben Strahlengang optisch getrennt werden und die Größe der zu untersuchenden Objekte kann aufgrund ihres Eigenleuchtens bei ausreichend hohem Kontrast weit unter der Auflösungsgrenze eines Lichtmikroskopes liegen.

In einer bevorzugten Ausführungsform der vorliegenden Erfindung erfolgt das Verfahren, wobei die Identifizierung der Massengüter in Artikeln durch einen Nachweis der Polymerdispersionen mit der Cytometrie durchgeführt wird.

Die Identifizierung der kodierten Mikropartikeln ist mit Hilfe handelsüblicher Cytometer möglich, die ein Fluoreszenzspektrometer und/oder Photodetektoren mit geeigneten Filtern eingebaut enthalten. Die Identifizierung der kodierten Mikropartikeln erfolgt dabei z.B. durch die Analyse des gesamten Fluoreszenzspektrums oder der emittierten Strahlung einzelner ausgewählter Wellenlängen, wobei auch die Wellenlänge des eingestrahlten, zur Fluoreszenz anregenden Lichtes variiert werden kann. Cytometer, die für die Identifizierung von kodierten Mikropartikeln geeignet sind, werden beispielsweise von Partec GmbH, Otto-Hahn-Str. 32, D-48161, vertrieben.

In einer bevorzugten Ausführungsform wird das Verfahren durchgeführt, wobei die Polymerdispersionen auf die Massengüter während deren Herstellung aufgesprüht werden.

In einer bevorzugten Ausführungsform des erfindungsgemäßen Verfahrens umfassen die Massengüter Einsatzstoffe in der Bauindustrie, insbesondere bevorzugt Beton, Zement, Klinker, Mörtel, Putze, Dichtstoffe, Fließmittel und Mahlhilfsmittel.

Die Art und verwendete Menge des Massengutes kann auf mehrere Arten nachgewiesen werden.

Ein tragbares Nachweisgerät erlaubt einen rein qualitativen Nachweis der Art des Massengutes durch eine Spektralanalyse seiner Oberfläche. Dieses Gerät kann auf eine einzelne Markerspezies geeicht werden.

Die qualitative und gleichzeitige quantitative Bestimmung der verwendeten Menge eines Massengutes zur Herstellung eines Artikels erfolgt durch Zählen der Anzahl von Markerpartikeln. Dabei muss die Ausgangskonzentration der Marker im zu bestimmenden Massengut bekannt sein.

Der Nachweis kann weitgehend zerstörungsfrei durch Fluoreszenzmikroskopie einer geeigneten Oberfläche des Artikels erfolgen. Außerdem kann eine Probe des Artikels in einem geeigneten Medium aufgelöst werden und dann mittels Cytometrie die in der gelösten Probe enthaltenden Markerpartikel ausgezählt werden.

Die folgenden Beispiele sollen die Erfindung näher erläutern.

### Markierung von Baustoffen

### Beispiel 1

### Herstellung der Probenkörper

### Präparation der Probekörper mit und ohne markierende Partikel

Um die Wiederfindungsrate der eingesetzten markierenden Substanzen im erhärteten Betonstein zu bestimmen, wurden diese zu einer üblichen Betonmischung in verschiedenen Konzentrationen zugegeben. Die Zugabe erfolgte zusammen mit dem Anmachwasser. Der Gehalt an Wasser der Partikelsuspension wurde dabei auf das Anmachwasser des Betons angerechnet. Für diese Versuche wurde eine übliche Transportbetonmischung herangezogen. Gemischt wurde in einem Betonmischer (Zyklos Zwangsmischer) mit 150 Liter Mischkapazität bei 60 U/Min. Der Frischbeton wurde daraufhin in Normenwürfel (15 x 15 x 15 cm Kantenlänge) verfüllt und unter Normklima der Erhärtung unterzogen. Nach der Erhärtung (t > 7d) wurden die Probekörper hinsichtlich der Partikelwiederfindung untersucht. Für die Bestimmung des Null-Wertes wurden Probekörper ohne Zusatz der markierenden Partikel hergestellt.

Folgende Materialien wurden zur Herstellung der Beton-Probekörper verwendet:
1. Portlandzement CEM I 42.5 R
2. Quarzsand 0,1 - 0,3 mm
3. Quarzsand 0,3 - 1,0 mm
4. Sand 0,4 mm
5. Rießel 4/8 mm
6. Kies 8/16 mm
7. Wasser
8. Marker-Dispersionen (siehe Tabelle 1)

Die Betone wurden nach folgendem Mischprozedere hergestellt:
1. Zuschläge und Zement trocken für 30 Sekunden vermischen
2. Anmachwasser und Markerdispersionen zugeben
3. Weitere 270 Sekunden mischen

**Tabelle 1: zeigt die ohne sowie mit verschiedenen Zugaben der markierenden Substanz hergestellten Probekörper.**

| lfd. Nr. | CEM [kg] | H₂O [l/m³] | w/z | Füllgrad 50 l Mischer | | Feststoff-dosierung | soll [g] | ist [g] | [°C] |
|---|---|---|---|---|---|---|---|---|---|
| 1 | 300,00 | 174,00 | 0,58 | 60,00% | | | | | 22,0 |
| 2 | 300,00 | 174,00 | 0,58 | 60,00% | | 0,0002% | 0,07 | 0,07 | 22,1 |
| 3 | 300,00 | 174,00 | 0,58 | 60,00% | | 0,0005% | 0,17 | 0,17 | 22,0 |
| 4 | 300,00 | 174,00 | 0,58 | 60,00% | | 0,001% | 0,34 | 0,34 | 22,2 |
| 5 | 300,00 | 174,00 | 0,58 | 60,00% | | 0,005% | 1,71 | 1,71 | 22,1 |
| 6 | 300,00 | 174,00 | 0,58 | 60,00% | | | | | 19,5 |
| 7 | 300,00 | 174,00 | 0,58 | 60,00% | | 0,0002% | 0,04 | 0,04 | 20,2 |
| 8 | 300,00 | 174,00 | 0,58 | 60,00% | | 0,0005% | 0,10 | 0,10 | 20,2 |
| 9 | 300,00 | 174,00 | 0,58 | 60,00% | | 0,001% | 0,21 | 0,21 | 19,8 |
| 10 | 300,00 | 174,00 | 0,58 | 60,00% | | 0,005% | 1,03 | 1,03 | 20,1 |

| | | | | | | | | | |
|---|---|---|---|---|---|---|---|---|---|
| w/z: Verhältnis von Wasser zu Zement CEM: Portlandzement CEM I 42.5 R | | | | | | | | | |

### Beispiel 2

### Zugabe beim Mahlen

Um die Wiederfindungsrate der eingesetzten markierenden Substanzen nach einer starken mechanischen Beanspruchung, wie sie bei der Zementherstellung auftritt, zu bestimmen, wurden diese während der Vermahlung zu einem üblichen Portlandzementklinker (PZ-Klinker) in verschiedenen Konzentrationen zugegeben (siehe Tabelle 2). Die Zugabe erfolgte vor Beginn des Mahlvorganges als Dispersion der Partikel zum Zementklinker. Die Vermahlung erfolgte in einer Planeten-Kugelmühle der Fa. Fritsch (Pulverisette 4). Mahlbecher als auch Mahlkugeln bestanden aus gehärtetem Stahl. Der Durchmesser der Mahlkugeln betrug hierbei 20 mm. Die Einwaage des Mahlgutes, also des Portlandzementklinkers, betrug 130 g. Der Portlandzementklinker wurde vor Starten des Mahlvorganges auf eine Körnung < 5mm vorgebrochen. Als Mahldauer wurde 15 ± 1 Minute gewählt. Hiermit wurde eine Mahlfeinheit von 4000 ± 200 cm² / g erzielt, was der Feinheit eines handelsüblichen CEM I 42.5 R entspricht. Für die Bestimmung des Null-Wertes wurden Proben ohne Zusatz der markierenden Partikel hergestellt.

**Tabelle 2: zeigt die ohne sowie mit verschiedenen Zugaben der markierenden Substanz hergestellten Mahlungsproben.**

| lfd. Nr. | PZ- Klinker [g] | Marler | Fst. Dos. | soll [g] | Verdünnungs-faktor d. Dispersion | ist [g] |
|---|---|---|---|---|---|---|
| 1 | 130,00 | Nullmischung | | | | |
| 2 | 130,00 | Marker GK 2465/50 (26,30%) | 0,0002% | 0,0010 | 1 : 10 | 0,0131 |
| 3 | 130,00 | Marker GK 2465/50 (26,30%) | 0,0010% | 0,0049 | 1 : 10 | 0,0476 |
| 4 | 130,00 | Marker GK 2465/50 (26,30%) | 0,0050% | 0,0247 | 1 : 10 | 0,2503 |
| 5 | 130,00 | Marker GK 2465/50 (26,30%) | 0,0100% | 0,0494 | 1 : 1 | 0,0467 |
| 6 | 130,00 | Marker GK 2465/50 (26,30%) | 0,0200% | 0,0989 | 1 : 1 | 0,0952 |
| 7 | 130,00 | Nullmischung | | | | |
| 8 | 130,00 | Marker GK 2465/162 (43,90%) | 0,0002% | 0,0006 | 1 : 100 | 0,0600 |
| 9 | 130,00 | Marker GK 2465/162 (43,90%) | 0,0010% | 0,0030 | 1 : 10 | 0,0301 |
| 10 | 130,00 | Marker GK 2465/162 (43,90%) | 0,0050% | 0,0148 | 1 : 10 | 0,1533 |
| 11 | 130,00 | Marker GK 2465/162 (43,90%) | 0,0100% | 0,0296 | 1 : 10 | 0,3003 |
| 12 | 130,00 | Marker GK 2465/162 (43,90%) | 0,0200% | 0,0592 | 1 : 10 | 0,5934 |

| | | | | | | |
|---|---|---|---|---|---|---|
| Marker GK = Polymerdispersion mit Lumogen Rosa 285 | | | | | | |

### Beispiel 3

### Wiederfindung von fluoreszenzmarkierten Polymerpartikeln in Beton

Mit Lumogen Rosa 285 gefärbte Polymerpartikel (d = 3 µm) wurden in einem Masseverhältnis von 25 / 615 / 1291 / 6333 µg/kg in Beton eingemischt und zu einem Würfel mit 15 cm Kantenlänge gegossen. Nach dem Aushärten des Betons, wurde durch Bohren (HILTI TE24 - Steinbohrer 12mm) eine Probe entnommen. Die Masse des entnommenen Bohrstaubes belief sich dabei auf ca. 20 g.
5 g diesen Bohrstaubes wurden in einen 100 ml Erlenmeyerkolben eingewogen und auf 100 g mit 1M HCl aufgefüllt. Diese Suspension wurde anschließend 2 h bei 500 Upm auf einem Magnetrührer (IKAMAG RET-G) gerührt. Danach sedimentierte die Probe für 2 Minuten. Der Überstand wurde zur Messung mit einer Pipette abgezogen. Als Sollwert dient eine Konzentrationsreihe mit Lumogen Rosa 285 gefärbten Partikeln in VE-Wasser. Die Analyse der Partikel in VE-Wasser, sowie im Überstand der Proben erfolgte mit dem Durchflußcytometer LSR II der Fa. BD- Biosciences.
Die Meßparameter des Gerätes waren so eingestellt, dass zwei Fluoreszenzbereiche zur Detektion der Signale benutzt wurden. Die Anregung des Farbstoffes erfolgte bei einer Wellenlänge von 488 nm. Die Fluoreszenz wurde durch Bandpassfilter bei 575 nm±13 nm, sowie 530 nm±15 nm gemessen.

Beide Fluoreszenzbereiche wurden dabei in einem 2-dimensionalen Diagramm gegeneinander aufgetragen. Alle detektierten Teilchen, die in einer vordefinierten Markierung liegen, wurden summiert. Gemessen wurden die Signale der gefärbten Polymerpartikel über einen Zeitraum von 1 Minute.

Zur Bestimmung der Partikelanzahl als Funktion der zugesetzten Feststoffmenge wurde zunächst eine Konzentrationsreihe der Partikel in VE-Wasser angesetzt. Die Gesamtpartikelanzahl nach 1 Minute in dem vorgegebenen Bereich wird in Abhängigkeit der Massen Konzentration zu einer Eichgeraden aufgetragen, der lineare Trend berechnet und dargestellt. Die Steigung wird als Sollwert (100 % Wert) angesehen.

Analog dieser Messung, erfolgt die Messung der aus dem Beton extrahierten Partikel im Überstand der Betonproben. Abschließend wird die Anzahl der Partikel in Beton zur Anzahl der Partikel in VE-Wasser in Relation gesetzt. Der sich daraus ergebende Wert entspricht der Wiederfindungsrate der fluoreszierenden Partikel in Beton. Die interpolierte Wiederfindungsrate lag in diesem Fall bei 93 %.

Eine Tabelle, bei der die Partikelanzahl der Kalibrierwerte auf die Konzentrationen der Messwerte des markierten Betons normiert wurde, ist in Tabelle 3 dargestellt.

**Tabelle 3 Tabellarische Darstellung der Ergebnisse**

| | **Partikelanzahl (n/min)** | | |
|---|---|---|---|
| **c(µg/kg)** | **VE-Wasser** | **Beton** | **Wiederfindung (%)** |
| **1.24** | **99** | **53** | **54** |
| **30.75** | **2186** | **2146** | **98** |
| **64.55** | **4515** | **3637** | **81** |
| **316.65** | **22643** | **20945** | **93** |

Aufgrund der stärkeren Gewichtung der Wiederfindungsrate bei höheren Konzentrationen ist die grafische Auswertung genauer und daher der tabellarischen Form vorzuziehen.

### Beispiel 4

### Wiederfindung von fluoreszenzmarkierten Polymerpartikeln in Klinker vermahlen

Mit Lumogen Rosa 285 gefärbte Polymerpartikel (d = 3 µm) wurden in einem Masseverhältnis von 200 mg/kg in Allmendinger Klinker auf einer Planeten-KugelMühle (Pulverisette 4-20 mm System) über einen Zeitraum von 15 Minuten vermahlen. Die Analyse des Zementpulvers wurde anschließend analog dem Beispiel 1 durchgeführt, wobei die Partikel entsprechend nachgewiesen werden konnten.

### Beispiel 5

### Wiederfindung von fluoreszenzmarkierten Polymerpartikeln in Fliesenkleber

Mit Lumogen Rosa 285 gefärbte Polymerpartikel (Teilchengröße ∼ 3 µm) wurden in Masseverhältnis von 2 mg/kg in Fliesenkleber (PCI- Nanolight) eingemischt und zu einem etwa 5 mm Film verstrichen. Nach Aushärten des Fliesenklebers wurde der Film aufgenommen und in einem Mörser pulverisiert.
5 g davon wurden in einen 100 ml Erlenmeyerkolben eingewogen und auf 100 g mit 1M HCl aufgefüllt. Diese Suspension wurde 35 Tage bei 500 UpM auf einem Magnetrührer IKAMAG RET-G ununterbrochen gerührt und anschließend 2 min sedimentiert.
Der Überstand wurde mit dem Durchflusscytometer LSR II der Fa. BD- Biosciences vermessen.
Als Referenz zu den im Fliesenkleber befindlichen Partikeln wurden Lumogen Rosa 285 gefärbte Partikel in VE-Wasser in einer Massekonzentration von 100 µg/kg angesetzt. Die Detektion erfolgte über 2 Fluoreszenzbereiche. Die Anregung des Farbstoffes erfolgte bei einer Wellenlänge von 488 nm. Gemessen wurden die Signale der gefärbten Polymerpartikel über einen Zeitraum von 1 Minute.

Die Fluoreszenz wurde durch Bandpassfilter bei 575 nm±13 nm, sowie 530 nm±15 nm gemessen. Die beiden Fluoreszenzbereiche wurden dabei in einem 2-dimensionalen Diagramm gegeneinander aufgetragen. Alle detektierten Teilchen, die in der vordefinierten Markierung liegen, wurden anschließend zu einer Gesamtanzahl summiert.

Zur Bestimmung des Sollwertes (100 %-Wert) wurde die Referenzprobe der gefärbten Partikel in VE-Wasser gemessen. Die Messung der Gesamtpartikelanzahl nach 1 Minute wurde als Sollwert angesehen. Analog dieser Messung, erfolgt die Messung der Partikel im Überstand der Fliesenkleberproben. Abschließend wird die Anzahl der Partikel in Fliesenkleber zur Anzahl der Partikel in VE-Wasser in Relation gesetzt. Der sich daraus ergebende Wert entspricht der Wiederfindungsrate der fluoreszierenden Partikel in Fliesenkleber. Die Wiederfindungsrate lag bei 72 %.

**Tabelle 4 Tabellarische Darstellung der Ergebnisse**

| | **Partikelanzahl (n/min)** | | |
|---|---|---|---|
| **c(µg/kg)** | **VE-Wasser** | **Fliesenkleber** | **Wiederfindung (%)** |
| **100** | **7020** | **5035** | **72** |

### Beispiel 6

### Zugabe des Markers nach dem Mahlen

### a. Sprühgetrocknetes Pulver

Das erfindungsgemäße Kapselpulver wird beispielsweise durch Sprühtrocknung der Markerpartikeldispersionen erhalten. Bevorzugt erfolgt das Versprühen der wässrigen Polymerisatdispersion im Warmluftstrom mittels Einstoffdüsen. Die Tröpfchengröße bei Austritt wird so gewählt, dass ein Mikrokapselpulver entsteht, beim dem die Pulverteilchen eine mittlere Teilchengröße im Bereich von 150 - 400 µm und 80 Gew.-% der Teilchen eine Größe ≥ 90 µm haben. Abhängig von der Viskosität der Kapseldispersion wählt der Fachmann den Durchmesser der Düse und den Vordruck des Stoffstroms. Je höher der Vordruck, desto kleinere Tröpfchen werden erzeugt. Üblicherweise wird die Mikrokapseldispersion im Bereich von 2 - 200 bar eingespeist. Vorteilhaft wird eine Einstoffdüse mit Drallerzeuger verwendet. Über die Auswahl des Drallerzeugers können Tropfengröße und Sprühwinkel zusätzlich beeinflusst werden. Beispielsweise kann man Einstoffdüsen der Firma Delavan verwenden, die einen typischen Aufbau bestehend aus Drallkammer, welche den Sprühwinkel beeinflusst, und Lochplatte haben, welche den Durchsatz beeinflusst.

Im Allgemeinen wird so vorgegangen, dass die Eingangstemperatur des Warmluftstroms im Bereich von 100 bis 200 °C, vorzugsweise 120 bis 180 °C, und die Ausgangstemperatur des Warmluftstroms im Bereich von 30 bis 110 °C, vorzugsweise 50 bis 90 °C liegt. Die Temperaturdifferenz zwischen Eingangs- und Ausgangstemperatur beträgt vorzugsweise mindestens 50 °C, bevorzugt mindestens 60 °C und besonders bevorzugt mindestens 70 °C. Die Abscheidung der Feinteile aus dem Gasstrom erfolgt normalerweise unter Verwendung von Zyklonen oder Filterabscheidern. Dabei werden die Feinteile bevorzugt redispergiert und in den Stoffstrom zurückgeführt. Die versprühte wässrige Polymerisatdispersion und der Warmluftstrom werden vorzugsweise parallel geführt.

Nach einer Verfahrensvariante ist es möglich, nachgeschaltet an den Trockner, ein Wirbelbett zu schalten, um gegebenenfalls Restfeuchte auszutragen. Verfahren, bei denen an die Sprühtrocknung eine Wirbelbetttrocknung angeschlossen ist, werden bevorzugt, da sie zu einem Mikrokapselpulver mit einem geringeren Feinanteil führen. Als Sprühturm lassen sich beispielsweise Trockner der Firmen Anhydro, Miro oder Nubilosa verwenden, die Turmhöhen von 12-30 Metern und Breiten von 3 bis 8 Metern haben. Der Durchsatz an Trockenluft liegt für solche Sprühtürme typischer Weise im Bereich von 20-30 t/h. Der Durchsatz an Markerdispersion liegt dann in der Regel bei 1 bis 1,5 t/h.

### Beispiel für eine Sprühtrocknung

Es wurde eine Düsenkombination mit drei Einstoffdüsen verwendet. Die Bauteile der Düsenkombination der Firma Delavan sind zum einen die Drallkammer und zum anderen die Lochplatte zur Beeinflussung des Durchsatzes bei gegebenen Turmparametern. Der Sprühturm hat einen Durchmesser von 5 m bei einer Höhe von 24 m und wird bei einem Unterdruck von 0,5- 3 mbar, gemessen an der Turmmitte, im Gleichstromverfahren mit bis zu 25 t/h, mittels Dampf erhitzter Trockenluft gefahren. Die Temperaturdifferenz der Trocknung liegt bei ca. 70 °C, wobei die Produktaustragstemperatur durch "Nachbehandlung" bei ca. 25 °C liegt. Der Produktaustrag erfolgt über Zyklone. Die Zyklonware (Feinanteil) wird redispergiert und wieder eingespeist. Es wurde eine Markerpartikeldispersion mit einer Viskosität von -200 mPas, gemessen in einem Brookfield-Viskosimeter, mit einem Vordruck von 20 bis 28 bar über die Düsenkombination versprüht.

Sprühgetrocknete und mit Lumogen Rosa 285 gefärbte Polymerpartikel (d = 3µm) wurden in einem Masseverhältnis von 1 bis 6.500 µg/kg in Zementpulver CEMI 42.5 eingemischt. Mit diesem Zementpulver wurden Betonwürfel mit 15 cm Kantenlänge gegossen entsprechend denen in Beispiel 1. Nach dem Aushärten des Betons wurde durch Bohren (HILTI TE24 - Steinbohrer 12 mm) eine Probe entnommen. Die Masse des entnommenen Bohrstaubes belief sich dabei auf ca. 20 g. Die cytometrischen Wiederfindungsraten nach analoger Probenvorbereitung des Beispiels 3 lagen bei 21 bis 98 %.

### Beispiel 7

### Dispersion auf Träger aufgezogen

Mit Lumogen Rosa 285 gefärbte Polymerpartikel (d = 3µm) wurden in einem Masseverhältnis 100 mg/kg mit Gips vermengt. 1 g des die Markerpartikel enthaltenden Gipses wurde mit 999 g CEMI 42,5 vermengt. 5g des erhaltenen Pulvers wurden analog Beispiel 3 aufgearbeitet. Die cytometrische Wiederfindungsrate des Markers lag bei 83%.

### Beispiel 8

### Qualitativer und quantitativer Nachweis mittels Fluoreszenzmikroskopie

Die Vorbereitung der Probe besteht aus der Erzeugung eines frischen Bruchstückes des Betons und Mörtels. Die frische Bruchfläche sollte einen kleinen Bereich von wenigen Quadratmillimetern aufweisen, der sich durch eine geringe Unebenheit ausweist, was für den Nachweis von Vorteil ist. Der Nachweis der unterschiedlichen Marker erfolgt durch das spektral aufgelöste Messen der Fluoreszenz jedes einzelnen Markerpartikels innerhalb des Bildausschnitts. Der Bildausschnitt wird mit einem Laser-Scanning Mikroskop Punkt für Punkt abgescannt. Dabei wird ein geeignet ausgewählter Laser auf die zu untersuchende Probe fokussiert und mit dem Laserfokus eine ausgewählte Probenfläche abgerastert. Trifft der Fokus auf einen Markerpartikel, wird durch den Laser der Marker zur Fluoreszenz angeregt. Die erzeugte Fluoreszenz wird spektral detektiert. Das Abrastern der Probe liefert in jedem Punkt der Probe, an der sich ein Markerpartikel befindet, ein für den Marker charakteristisches Spektrum der Fluoreszenz als Signal. Markerpartikel, die die gleichen Markerfarbstoffe enthalten, liefern das gleiche charakteristische spektrale Signal, Markerpartikel mit anderen Markerfarbstoffen ergeben ein anderes für sie charakteristisches unterscheidbares Signal. Auf diese Weise wird bestimmt, welche Marker in der Probe vorhanden sind (qualitativer Nachweis). Werden im ausgewählten Bildausschnitt (Probenausschnitt) neben der Art der vorhandenen Markerpartikel noch die jeweilige Anzahl bestimmt, so kann aus der Kenntnis des Bildausschnitts und der Auslesetiefe die Konzentration der jeweiligen Markerpartikel ermittelt werden (quantitativer Nachweis).

### Beispiel 9

### Praxistest: Dosierung in die Lufttransportrinne während der Zementproduktion

Eine Polymerdispersion wird mittels einer Schneckenförderpumpe durch eine Sprühdüse in eine Zementluftförderrinne dosiert. Die in der Dispersion enthaltenen Polymerpartikel sind eine Mischung aus 64 Teilen von solchen, die 0.12 Gew.-% Lumogen F Gelb 083 enthalten, aus 8 Teilen von solchen, die 0.12 Gew.-% einer 1:1-Mischung von Lumogen F Rot 305 und Lumogen F Orange 240 enthalten, und aus einem Teil von solchen, die zu 0.12 Gew.-% Lumogen F Rosa 285 enthalten. Die Dispersion enthält einen Feststoffgehalt von 17 % und wird mit 10 Litern pro Stunde in die Luftförderrinne, in der 25 Tonnen Zement pro Stunde transportiert werden, eingesprüht. Auf diese Weise werden dem Zement 68 ppm gefärbte Polymerpartikel zugesetzt.
Zur Analyse wird zirka 50 Meter von der Dosierstelle entfernt in Abständen von 20 Minuten Zementproben von je einem Kilogramm aus der Luftförderrinne entnommen. Der Zement wird untersucht mittels optischer Fluoreszenz-Mikroskopie, aus der der Farbcode entnommen werden kann. Ferner wird 1 Gramm Zement in 100 Gramm 1-molarer Salzsäure mittels eines Magnetrührers homogenisiert und anschließend 15 Minuten im Ultraschallbad bei 40 °C aufgelöst. Die Lösung wird mittels eines Multikanalcytometer LSR II der Firma BD-Biosciences für 60 Sekunden gemessen. Die Anzahl der Fluoreszenz-Ereignisse, die vom Gerät während der Messung registriert werden, entspricht im Durchschnitt der Anzahl der dem Zement zugesetzten Partikel und erlaubt so die Quantifizierung. Die übliche zweidimensionale Auftragung nach Intensität in den zwei Messkanälen bei 530 nm und 575 nm ermöglicht eine exakte Zuordnung des Fluoreszenzfarbstoffes. Das Messergebnis gibt die eingesetzte Farbmischung korrekt wieder.

### Beispiel 10

### Praxistest: Dosierung in den Klinkerdosierstrom während der Zementproduktion

Eine dem Beispiel 9 analoge Polymerdispersion mit einem Feststoffgehalt von 33 % wird mit einer konstanten Rate von 5 Litern pro Stunde auf einen Klinkerdosierstrom von 25 Tonnen pro Stunde aufgetragen. Der Klinker wird umgehend nach Auftragung der Polymerdispersion in eine Kugelmühle überführt, in der der Klinker mit Zusätzen bei maximal 140 °C zu Zement gemahlen wird. Es werden Zementproben analog zu Beispiel 9 aus der nachfolgenden Zementluftförderrinne entnommen und wie in Beispiel 9 auf fluoreszierende Partikel untersucht. Die detektierten fluoreszierenden Partikel entsprechen mit Abweichungen von unter 10 % der auf den Klinker aufgegebenen Menge. Die Verhältnisse der eingesetzten Farben kann quantitativ wiedergefunden werden.

### Beispiel 11

### Praxistest: Herstellung von Betonprobekörpern und Analyse des markierten Zementes

Der im Beispiel 10 beschriebene markierte Zement wurde in einem Verhältnis von 1 Gewichtsanteil Wasser, 2 Gewichtsanteile Zement sowie 10 Gewichtsanteile Zuschlag vermischt und in eine Form gegossen. Nach dem Abbinden des Betons wurden 5g pulverisiert, mit 100ml 1-molarer HCl versetzt und entsprechend Beispiel 9 in Aufschluss und Analyse verfahren. Die detektierten fluoreszierenden Partikel entsprechen der dosierten Menge. Die Verhältnisse der eingesetzten Farben wurden wiedergefunden.

## Patentansprüche

1. Verfahren zur Identifizierung und Quantifizierung von Massengütern in Artikeln, **dadurch gekennzeichnet**, das den Massengütern eine fluoreszenzmarkierte Polymerdispersion zugesetzt wurde, worin Partikel durch eine Mischung von Farbstoffen kodiert sind, und die Polymerdispersionspartikel quantitativ bestimmt werden, wobei die Massengüter Baustoffe umfassen.

2. Verfahren nach Anspruch 1, **dadurch gekennzeichnet, dass** die Massengüter flüssige und feste Massengüter umfassen.

3. Verfahren nach Anspruch 1 und 2, **dadurch gekennzeichnet, dass** die flüssigen Massengüter Betonfließmittel und Mahlhilfsmittel umfassen.

4. Verfahren nach Anspruch 1 und 2, **dadurch gekennzeichnet, dass** die festen Massengüter Beton, Zement und Klinker enthalten.

5. Verfahren nach Anspruch 1 bis 4, **dadurch gekennzeichnet, dass** die Polymerdispersionen eine Partikelgrößenverteilung mit einem mittleren Durchmesser von 50 nm bis 500 µm aufweisen.

6. Verfahren nach Anspruch 1 bis 5, **dadurch gekennzeichnet, dass** die Polymerdispersionen aus den hydrophoben Monomeren der Gruppe C₁- bis C₁₈-Alkylester der Acrylsäure, C₁- bis C₁₈-Alkylester der Methacrylsäure, Vinylacetat, Vinylpropionat, Vinylbutyrat, Styrol, Chlorstyrol, α-Methylstyrol, Methacrylsäureester, Maleinsäure sowie einer Kombination dieser Monomere ausgewählt sind.

7. Verfahren nach Anspruch 1 bis 6, **dadurch gekennzeichnet, dass** die Polymerdispersionen Fluoreszenzfarbstoffe enthalten, die im Wellenlängenbereich von 200 nm bis 1400 nm absorbieren und emittieren.

8. Verfahren nach Anspruch 7, **dadurch gekennzeichnet, dass** die Fluoreszenzfarbstoffe aus der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe ausgewählt sind.

9. Verfahren nach Anspruch 7 und 8, **dadurch gekennzeichnet, dass** die Fluoreszenzfarbstoffe Rylenderivate umfassen.

10. Verfahren nach Anspruch 1 bis 9, **dadurch gekennzeichnet, dass** die Identifizierung der Massengüter in Artikeln durch einen Nachweis der Polymerdispersionen mit der Fluoreszenzmikroskopie durchgeführt wird.

11. Verfahren nach Anspruch 1 bis 10, **dadurch gekennzeichnet, dass** die Identifizierung der Massengüter in Artikeln durch einen Nachweis der Polymerdispersionen mit der Cytometrie durchgeführt wird.

12. Verfahren nach Anspruch 1 bis 11, **dadurch gekennzeichnet, dass** die Polymerdispersionen auf die Massengüter während deren Herstellung aufgesprüht werden.

13. Verfahren nach Anspruch 1 bis 12, **dadurch gekennzeichnet, dass** die Massengüter Einsatzstoffe in der Bauindustrie umfassen.

14. Verfahren nach Anspruch 13, **dadurch gekennzeichnet, dass** die Einsatzstoffe in der Bauindustrie Beton, Zement, Klinker, Mörtel, Putze, Dichtstoffe, Fließmittel und Mahlhilfsmittel umfassen.

## Claims

1. Method for identifying and quantifying mass-produced goods in articles, **characterized in that** a dye-containing polymer dispersion was added to the mass-produced goods, wherein particles are coded by a mixture of dyes and the polymer dispersion particles are quantitatively determined, wherein the mass-produced goods comprise construction materials.

2. Method according to Claim 1, **characterized in that** the mass-produced goods comprise liquid and solid mass-produced goods.

3. Method according to Claims 1 and 2, **characterized in that** the liquid mass-produced goods preferably comprise concrete plasticizers and grinding auxiliaries.

4. Method according to Claims 1 and 2, **characterized in that** the solid mass-produced goods preferably contain concrete, cement and clinker.

5. Method according to Claims 1 to 4, **characterized in that** the polymer dispersions have a preferred particle size distribution with a mean diameter of 50 nm to 500 µm.

6. Method according to Claims 1 to 5, **characterized in that** the polymer dispersions are selected from the hydrophobic monomers of the group consisting of C₁-to C₁₈-alkyl esters of acrylic acid, C₁- to C₁₈-alkyl esters of methacrylic acid, vinyl acetate, vinyl propionate, vinyl butyrate, styrene, chlorostyrene, α-methylstyrene, methacrylates, maleic acid and a combination of these monomers.

7. Method according to Claims 1 to 6, **characterized in that** the polymer dispersions contain fluorescent dyes which absorb and emit in the wavelength range from 200 nm to 1400 nm.

8. Method according to Claim 7, **characterized in that** the fluorescent dyes are selected from the class consisting of the coumarin, perylene, terrylene, quaterrylene, naphthalimide, cyanine, xanthene, oxazine, anthracene, naphthacene, anthraquinone or thiazine dyes.

9. Method according to Claims 7 and 8, **characterized in that** the fluorescent dyes preferably comprise rylene derivatives.

10. Method according to Claims 1 to 9, **characterized in that** the identification of the mass-produced goods in articles is carried out by detection of the polymer dispersions by fluorescence microscopy.

11. Method according to Claims 1 to 10, **characterized in that** the identification of the mass-produced goods in articles is carried out by detection of the polymer dispersions, preferably by cytometry.

12. Method according to Claims 1 to 11 **characterized in that** the polymer dispersions are sprayed onto the mass-produced goods during the production thereof.

13. Method according to Claims 1 to 12, **characterized in that** the mass-produced goods comprise starting materials in the construction industry.

14. Method according to Claim 13, **characterized in that** the starting materials in the construction industry, comprise concrete, cement, clinker, mortar, renders, sealants, plasticizers and grinding auxiliaries.

## Revendications

1. Procédé d'identification et de quantification de produits en vrac dans des articles, **caractérisé en ce qu'**une dispersion de polymère marquée par fluorescence a été ajoutée au produits en vrac, dans laquelle des particules sont codées par un mélange de colorants, et les particules de la dispersion de polymère sont déterminées quantitativement, les produits en vrac comprenant des matériaux de construction.

2. Procédé selon la revendication 1, **caractérisé en ce que** les produits en vrac comprennent des produits en vrac liquides et solides.

3. Procédé selon les revendications 1 et 2, **caractérisé en ce que** les produits en vrac liquides comprennent des fluidifiants de béton et des adjuvants de broyage.

4. Procédé selon les revendications 1 et 2, **caractérisé en ce que** les produits en vrac solides contiennent du béton, du ciment et du clinker.

5. Procédé selon les revendications 1 à 4, **caractérisé en ce que** les dispersions de polymères présentent une distribution des tailles de particules ayant un diamètre moyen de 50 nm à 500 µm.

6. Procédé selon les revendications 1 à 5, **caractérisé en ce que** les dispersions de polymères sont choisies parmi les monomères hydrophobes du groupe constitué par les esters alkyliques en C₁ à C₁₈ de l'acide acrylique, les esters alkyliques en C₁ à C₁₈ de l'acide méthacrylique, l'acétate de vinyle, le propionate de vinyle, le butyrate de vinyle, le styrène, le chlorostyrène, l'α-méthylstyrène, les esters de l'acide méthacrylique, l'acide maléique, ainsi qu'une combinaison de ces monomères.

7. Procédé selon les revendications 1 à 6, **caractérisé en ce que** les dispersions de polymères contiennent des colorants fluorescents, qui absorbent et émettent dans la plage de longueurs d'onde allant de 200 nm à 1 400 nm.

8. Procédé selon la revendication 7, **caractérisé en ce que** les colorants fluorescents sont choisis dans la classe des colorants coumarine, pérylène, terrylène, quaterrylène, naphtalimide, cyanine, xanthène, oxazine, anthracène, naphtacène, anthraquinone ou thiazine.

9. Procédé selon les revendications 7 et 8, **caractérisé en ce que** les colorants fluorescents comprennent des dérivés de rylène.

10. Procédé selon les revendications 1 à 9, **caractérisé en ce que** l'identification des produits en vrac dans les articles est réalisée par une détection des dispersions de polymères par microscopie de fluorescence.

11. Procédé selon les revendications 1 à 10, **caractérisé en ce que** l'identification des produits en vrac dans les articles est réalisée par une détection des dispersions de polymères par cytométrie.

12. Procédé selon les revendications 1 à 11, **caractérisé en ce que** les dispersions de polymères sont pulvérisées sur les produits en vrac pendant leur fabrication.

13. Procédé selon les revendications 1 à 12, **caractérisé en ce que** les produits en vrac comprennent des matières premières de l'industrie du bâtiment.

14. Procédé selon la revendication 13, **caractérisé en ce que** les matières premières de l'industrie du bâtiment comprennent du béton, du ciment, du clinker, du mortier, de l'enduit, des matériaux d'étanchéité, des fluidifiants et des adjuvants de broyage.
